(19) **Europäisches Patentamt**

**European Patent Office**

**Office européen des brevets**

(11) Veröffentlichungsnummer: **0 138 997**
**B1**

---

(12) **EUROPÄISCHE PATENTSCHRIFT**

(45) Veröffentlichungstag der Patentschrift:
**30.03.88**

(21) Anmeldenummer: **84901754.6**

(22) Anmeldetag: **11.04.84**

(86) Internationale Anmeldenummer:
**PCT/EP 84/00111**

(87) Internationale Veröffentlichungsnummer:
**WO 84/04034 (25.10.84 Gazette 84/25)**

(51) Int. Cl.⁴: **A 61 C 19/04**

---

(54) **VORRICHTUNG ZUM EINGIPSEN VON KIEFERMODELLEN BEI DER HERSTELLUNG VON ZAHNERSATZ.**

---

(30) Priorität: **12.04.83 DE 3313198**

(43) Veröffentlichungstag der Anmeldung:
**02.05.85 Patentblatt 85/18**

(45) Bekanntmachung des Hinweises auf die Patenterteilung:
**30.03.88 Patentblatt 88/13**

(84) Benannte Vertragsstaaten:
**AT BE CH DE FR GB LI LU NL SE**

(56) Entgegenhaltungen:
**GB - A - 2 066 667**
**US - A - 3 130 494**
**US - A - 3 693 260**
**US - A - 4 155 163**

(73) Patentinhaber: **PUSCHMANN, Johannes, Landshuter Strasse 4, D-8252 Taufkirchen (DE)**

(72) Erfinder: **PUSCHMANN, Johannes, Landshuter Strasse 4, D-8252 Taufkirchen (DE)**

(74) Vertreter: **Gustorf, Gerhard, Dipl.-Ing., Patentanwalt Dipl.-Ing. Gerhard Gustorf Mühlenstrasse 1, D-8300 Landshut (DE)**

---

# Beschreibung

Die Erfindung betrifft eine Vorrichtung zum Eingipsen von Kiefermodellen bei der Herstellung von Zahnersatz mit einem Artikulator, der einen unteren Modellträger für eine Unterkieferschablone und einen oberen Modellträger für eine Oberkieferschablone aufweist, wobei der obere Modellträger relativ zum unteren Modellträger um eine horizontale Achse – die Kondylarachse – schwenkbar ist.

Zur Herstellung einer Prothese ist es bisher überwiegend üblich, dass der Zahnarzt eine Handbissnahme durchführt, bei der er ohne Zuhilfenahme von Geräten die Zuordnung zwischen dem Unterkiefer und dem Oberkiefer festlegt. Dabei wird im zahnlosen Mund des Patienten eine Schablone mit Wachsbisswällen gefertigt, die die beiden Zahnreihen darstellen. Zur Anfertigung der Prothese werden im Labor des Zahntechnikers die beiden Schablonen am oberen bzw. am unteren Modellträger eines Artikulators befestigt. In der Mehrzahl der Fälle handelt es sich dabei in der Praxis um sogenannte Mittelwertartikulatoren, bei denen die Bissebene festliegt.

Der Erfindung liegt die Aufgabe zugrunde, die Vorrichtung der eingangs erläuterten Gattung so zu verbessern, dass mit verhältnismässig einfachen und leicht zu handhabenden Mitteln Prothesen hergestellt werden können, die auf die individuellen Werte des Patienten abgestimmt sind und dessen Bissebene exakt berücksichtigen.

Gemäss der Erfindung wird diese Aufgabe gelöst durch ein Gestell mit einer Bodenplatte zum Aufstellen des Artikulators, mit einer Feststelleinrichtung zur Fixierung der Kondylarachse relativ zur Bodenplatte sowie mit einem zur Bodenplatte parallelen Tisch, dessen Oberfläche die Bissebene bestimmt und der bezüglich der Kondylarachse vertikal und sagittal verstellbar ist.

Mit der Erfindung steht dem Zahntechniker ein Gerät zur Verfügung, das alle handelsüblichen Artikulatoren aufnehmen und dabei die Kondylarachse fixieren kann. Durch die Verstellung des Tisches in vertikaler und sagittaler Richtung entsprechend den am Patienten gemessenen Daten kann die Bissebene für jeden Patienten individuell festgelegt werden.

Die Teilanmeldung Nr. 86 112 963 (EP-A 0 210 668) enthält Ansprüche, die auf die Bissgabel gerichtet sind.

Weitere Merkmale und Vorteile der Erfindung ergeben sich aus den Unteransprüchen und aus der folgenden Beschreibung eines Ausführungsbeispiels, das in der Zeichnung dargestellt ist.

Es zeigen:

Fig. 1 die Seitenansicht eines menschlichen Kopfes zur Darstellung der Bissebene und der Camper'schen Ebene,
Fig. 2 den Kopf in Frontansicht zur Darstellung der Bipupillarlinie
Fig. 3 die perspektivische Ansicht eines menschlichen Unterkiefers mit dem zugehörigen Koordinatensystem,
Fig. 4 eine Draufsicht einer Bissgabel,
Fig. 5 die Seitenansicht der Bissgabel,
Fig. 6 die perspektivische Darstellung eines handelsüblichen Mittelwertartikulators,
Fig. 7 die perspektivische Darstellung eines Gestells gemäss der Erfindung zur Aufnahme eines Artikulators und
Fig. 8 in verkleinerter Darstellung die Seitenansicht des Gestells gemäss Fig. 7.

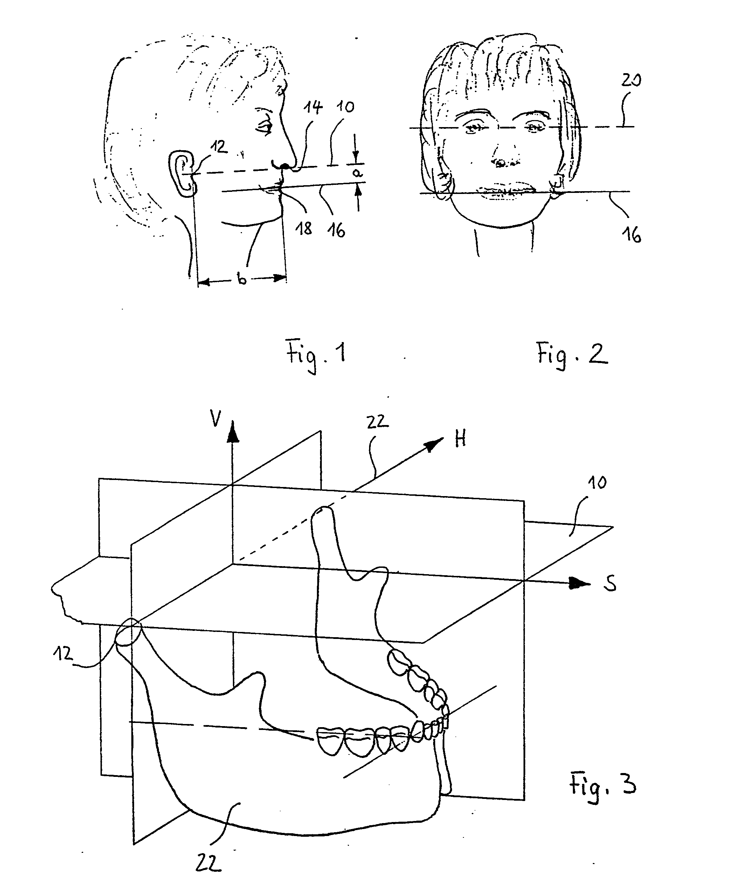

In Fig. 1 ist in Seitenansicht ein menschlicher Kopf gezeigt, bei dem die sogenannte Camper'sche Ebene 10 eingezeichnet ist. Diese Camper'sche Ebene 10 ist eine gedachte Ebene, die durch die beiden Kondylenpunkte 12 und den Subnasalpunkt 14 verläuft. Sie ist annähernd parallel zu der Bissebene 16 des Patienten und hat von dieser einen Abstand a.

In Fig. 1 ist ferner der Abstand b zwischen dem Kondylenpunkt 12 und der Vorderkante 18 der oberen Zahnreihe bzw. einer Oberkiefer-Bissschablone eingezeichnet.

Aus Fig. 2 ergibt sich, dass die Bissebene 16 parallel zur Bipupillarlinie 20 verläuft.

Fig. 3 zeigt in perspektivischer Darstellung einen Unterkiefer 22 im dreidimensionalen Koordinatensystem mit der vertikalen Achse V, der horizontalen Achse H und der sagittalen Achse S. Die horizontale Achse H verbindet dabei die beiden Kondylenpunkte 12 und ist somit identisch mit der Kondylarachse 22. Diese liegt in der Camper'schen Ebene 10, welche, wie bereits erwähnt, mit dem Abstand a parallel über der Bissebene liegt.

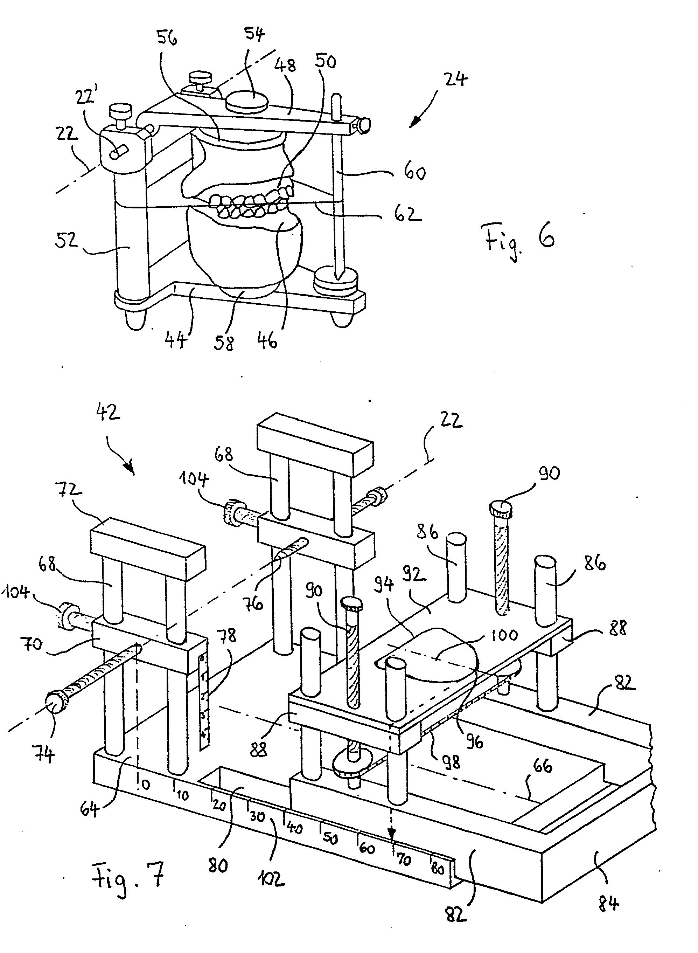

In der Praxis werden Prothesen über eine Handbissnahme und mit Hilfe eines in Fig. 6 gezeigten, handelsüblichen Mittelwert-Artikulators 24 hergestellt, wobei auf die in den Fig. 1 und 2 gezeigten Abstände a und b, die bei jedem Patienten verschieden sind, keine Rücksicht genommen wird.

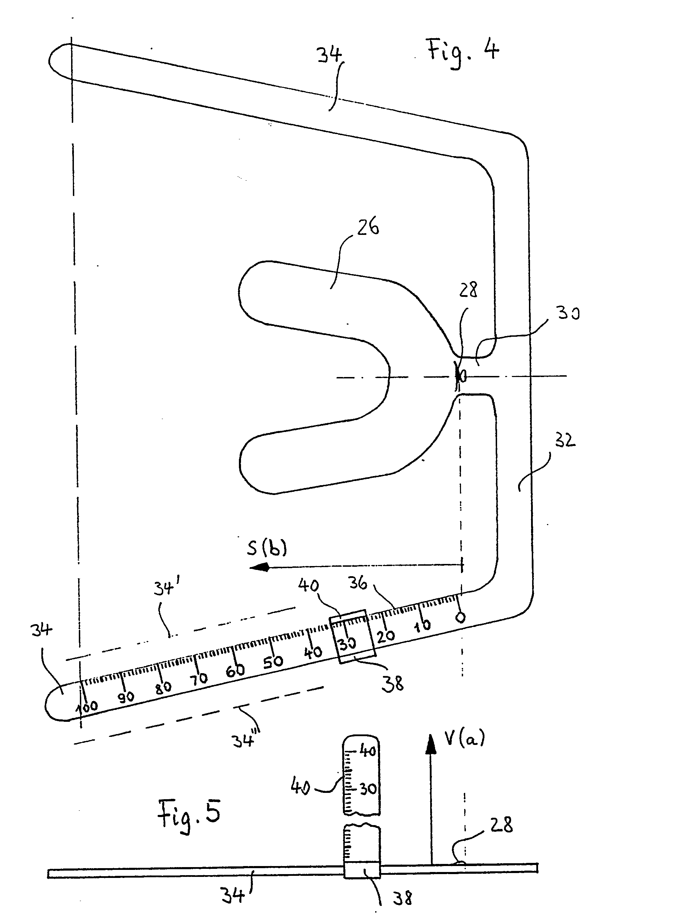

Die Fig. 4 und 5 zeigen eine Bissgabel 26, die U-förmig gebogen ist und an der Bogenspitze eine kleine Erhebung 28 aufweist und über einen Steg 30 mit einer Frontleiste 32 verbunden ist. Die Frontleiste 32 geht an beiden Seiten in je einen Schenkel 34 über. Die beiden Schenkel 34, die Frontleiste 32 und die Bissgabel 26 liegen in einer Ebene.

Entsprechend den unterschiedlichen Kopfformen können verschiedene Grössen zur Anwendung kommen, bei denen im Falle eines schmalen Kopfes die beiden Schenkel 34 näher beieinander liegen (gestrichelte Linie 34') als bei einem breiten Kopf (gestrichelte Linie 34'').

Wie Fig. 4 zeigt, ist vorgesehen, dass ein Schenkel 34 eine Massskala 36 trägt, deren Nullpunkt der Bogenspitze (Erhebung 28) der Bissgabel 26 entspricht. Wie aus Fig. 4 hervorgeht, liegt der Nullpunkt der Massskala 36 nicht genau lotrecht unter der Bogenspitze, sondern um das Mass versetzt, das den Winkel zwischen dem Schenkel 34 und der Frontleiste 32 berücksichtigt.

Auf dem Schenkel 34 ist ein Schieber 38 verstellbar, der eine vertikal verlaufende Massskala 40 trägt. Der Nullpunkt dieser Massskala 40 liegt auf der Oberseite des Schenkels 34.

Zur Bestimmung der in Fig. 1 eingezeichneten Abstände a und b am Patienten wird die Bissgabel so in den Mund eingesetzt, dass die Erhebung 28 an der Vorderkante der Oberkiefer-Bissschablone in deren Mitte anliegt. Die Oberkiefer-Bissschablone wird am Patienten zu der Camper'schen Ebene 10 parallel gestaltet, wobei die Bissgabel 26 mit ihrer Frontleiste 32 parallel zur Bipupillarlinie 20 ausgerichtet wird.

Mit Hilfe des Schiebers 38 und der darauf befestigten Massskala 40 kann der Abstand a zur Camper'schen Ebene 10 abgelesen werden; hierzu ist zuvor am Patienten der Kondylenpunkt 12 sichtbar gemacht worden. Gleichzeitig mit dieser Messung wird auf der Massskala 36 mit Hilfe des Schiebers 38, der bis zum Kondylenpunkt 12 verschoben ist, der Abstand b abgelesen.

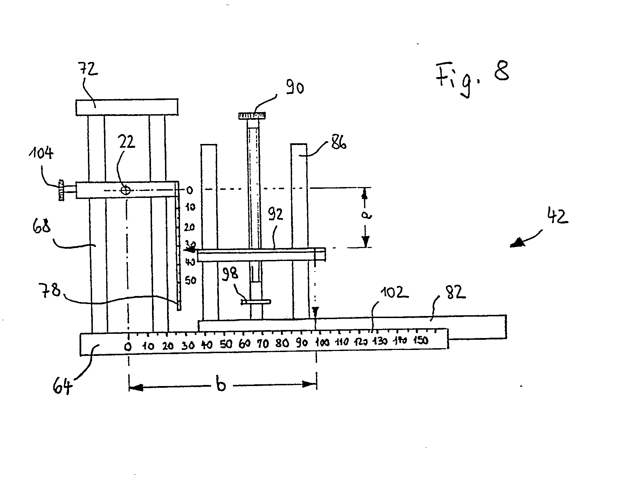

Die Übertragung dieser in Millimeter gemessenen Werte a und b auf den Artikulator 24 erfolgt mit Hilfe des in den Fig. 7 und 8 gezeigten Gestells 42. Bevor dieses näher erläutert wird, seien die Hauptbestandteile des in Fig. 6 gezeigten und bekannten Artikulators 24 kurz erwähnt. Der Artikulator 24 hat einen unteren Modellträger 44 für ein Unterkiefermodell 46 sowie einen oberen Modellträger 48 für ein Oberkiefermodell 50. Auf dem unteren Modellträger 44 sind zwei Kondylarsäulen 52 befestigt, zwischen denen der obere Modellträger 48 über die Kondylarachse 22 schwenkbar gelagert ist. Von dieser Kondylarachse 22 ragen zwei Achsstummel 22' seitlich aus den Kondylarsäulen 52 heraus.

Am oberen Modellträger 48 ist mittels einer Halteschraube 54 eine Montierplatte 56 befestigt, an der das Oberkiefermodell 50 festgelegt wird. Entsprechend hat auch der untere Modellträger 44 eine Montierplatte 58 für das Unterkiefermodell 46.

Mit Hilfe eines vertikalen Inzisalstiftes 60 können die beiden Modellträger 44 und 48 parallel zueinander eingestellt werden.

Entsprechend den in der Praxis vorkommenden Mittelwerten sind sowohl in den Inzisalstift 60 als auch in die beiden Kondylarsäulen 52 umlaufende Kerben eingearbeitet, in denen ein Gummiband 62 in der Höhe festgelegt wird und dadurch die Lage der Bissebene aufgrund der erwähnten Mittelwerte bestimmt.

Um nun die Bissebene unabhängig von diesen Mittelwerten in Funktion von den patientenbezogenen Abständen a und b einstellen zu können, wird der Artikulator 24 in das Gestell 42 eingesetzt. Dieses Gestell hat eine Bodenplatte 64 mit ebener Oberfläche, in der die sagittal verlaufende Längsmittelachse 66 angegeben ist. Die Bodenplatte 64 trägt an einem Ende an ihren beiden Längsseiten je zwei vertikale Säulen 68, auf denen jeweils ein Schieber 70 vertikal verstellbar geführt ist. An ihren oberen Enden sind die beiden Säulen 68 jedes Paares durch einen Holm 72 miteinander verbunden.

In jeden Schieber 70 ist eine horizontal verlaufende Feststellschraube 74 so eingeschraubt, dass ihre Spitze 76 der gegenüberliegenden Feststellschraube 74 zugewandt ist und zu dieser koaxial verläuft. Durch die beiden Feststellschrauben 74 wird die Kondylarachse 22 bestimmt.

Einer der beiden Schieber 70 trägt eine vertikal verlaufende Skala 78, deren Nullpunkt in der Höhe der Kondylarachse 22 liegt.

Wie Fig. 7 ferner zeigt, weist die Bodenplatte 64 an ihren beiden Längsseiten in sagittaler Richtung verlaufende Führungen 80 auf, von denen jede einen Schlitten 82 aufnimmt. Die beiden Schlitten 82 sind durch eine Griffleiste 84 fest miteinander verbunden.

Auf jedem Schlitten 82 sind zwei vertikale Säulen 86 befestigt, auf denen ein Schieber 88 mittels einer Einstellspindel 90 vertikal verstellbar ist. Die beiden Einstellspindeln 90 sind über einen Kettentrieb 98 oder dergleichen miteinander verbunden, so dass ein von den Schiebern 88 getragener Tisch 92, der parallel zur Bodenplatte 64 verläuft, immer parallel zu dieser verstellt wird. Die Oberfläche des Tisches 92 weist eine bogenförmige Bezugslinie 94 für das Oberkiefermodell 50 auf, deren vordere Bogenspitze 96 in Tischmitte (sagittale Mittellinie 100) liegt und parallel zur Kondylarachse 22 auf eine Ablesemarke (Pfeil) an einem Schlitten 82 projiziert ist.

An der Längsseite einer Führung 80 befindet sich eine Skala 102, deren Nullpunkt lotrecht unter der Kondylarachse 22 liegt.

Zur Einstellung der patientenbezogenen Bissebene 16 wird der handelsübliche Artikulator 24 auf die Bodenplatte 64 des Gestells 42 so gestellt, dass die Kondylarachse 22 (Achsstummel 22') in derselben Vertikalebene liegt wie die Längsmittelachse der beiden Feststellschrauben 74. Sodann werden die beiden Schieber 70 auf den Säulen 68 soweit verschoben, bis die Kondylarachse 22 des Artikulators 24 mit der Längsmittelachse der beiden Feststellschrauben 74 zusammenfällt. In dieser Stellung werden die beiden Schieber 70 durch Feststellschrauben 104 fixiert. Anschliessend werden die beiden Feststellschrauben 74 soweit eingeschraubt, bis ihre Spitzen 76 die Achsstummel 22' des Artikulators 24 erfassen und damit die Kondylarachse 22 fixieren. Dabei ist darauf zu achten, dass der Artikulator 24 bezüglich der Längsmittelachse 66 der Bodenplatte 64 zentrisch ausgerichtet ist.

Anschliessend wird der Tisch 92 über die in den beiden Führungen 80 verschiebbaren Schlitten 82 so nahe an die Skala 78 verfahren, dass an dieser Skala 78 der Abstand a der Oberfläche des Tisches 92 eingestellt werden kann. Zur Verstellung der Tischhöhe dienen die beiden durch den Kettentrieb 98 miteinander gekoppelten Einstellspindeln 90.

Nachdem nun der vertikale Abstand a der Bissebene 16 von der Camper'schen Ebene 10 festliegt, wird, wie Fig. 8 weiter zeigt, der Tisch 92 so weit verschoben, bis die Bogenspitze 96 der Bezugslinie 94 den zuvor ermittelten Abstand b von der Kondylarachse 22 hat. Dieser Abstand b kann über den Pfeil auf dem einen Schlitten 82 an der Skala 102 eingestellt werden.

Damit liegen die beiden individuellen Werte a und b fest. Im Anschluss daran kann die Oberkieferschablone des Patienten entsprechend der Bezugslinie 94 auf der Oberfläche des Tisches 92 zentriert werden. Danach wird auf der Oberkieferschablone der Funktionsabdruck mit Gips in bekannter Weise am oberen Modellträger 48 des Artikulators 24 befestigt.

Damit ist eine sehr genaue und für jeden Patienten individuelle Position der Oberkieferschablone eingestellt, so dass aufgrund dieser Position die Vollprothese oder auch eine Teilprothese angefertigt werden kann. Die parallele Lage von Tisch 92 und Bodenplatte 64 gewährleisten dabei ein paralleles Eingipsen im Artikulator 24.

Die Zuordnung des Unterkiefers zum Oberkiefer kann dann in bekannter Weise erfolgen und wird hier daher nicht weiter erläutert.

Die Anwendungsmöglichkeiten des Gestells 42 sind nicht auf die Totalprothetik beschränkt; es können auch vollbezahnte und teilbezahnte Kiefermodelle für alle Mittelwertartikulatoren im Bonwillschen Dreieck exakt eingegipst werden oder nach Bestimmung der beiden Abstände a und b mit Hilfe der in den Fig. 4 und 5 gezeigten Bissgabel 26 patientenbezogen einartikuliert werden.

Wenn von dem Gestell 42 der Tisch 92 mit den Schlitten 82 abgenommen wird, kann das Gestell 42 auch als Montagehilfe für Gesichtsbögen und die dazugehörigen Artikulatoren verwendet werden; hierzu werden die Gesichtsbögen auf den beiden Holmen 72 festgeklemmt.

## Patentansprüche

1. Vorrichtung zum Eingipsen von Kiefermodellen bei der Herstellung von Zahnersatz mit einem Artikulator (24), der einen unteren Modellträger (44) für eine Unterkieferschablone und einen oberen Modellträger (48) für eine Oberkieferschablone aufweist, wobei der obere Modellträger relativ zum unteren Modellträger um eine horizontale Achse (22) – die Kondylarachse – schwenkbar ist, gekennzeichnet durch ein Gestell (42) mit einer Bodenplatte (64) zum Aufstellen des Artikulators (24), mit einer Feststelleinrichtung (74) zur Fixierung der Kondylarachse (22) relativ zur Bodenplatte (64) sowie mit einem zur Bodenplatte (64) parallelen Tisch (92), dessen Oberfläche die Bissebene (16) bestimmt und der bezüglich der Kondylarachse (22) vertikal und sagittal verstellbar ist.

2. Vorrichtung nach Anspruch 1, dadurch gekennzeichnet, dass die Feststelleinrichtung zur Fixierung der Kondylarachse (22) aus zwei mit der Spitze (76) gegenüberliegenden, koaxialen Feststellschrauben (74) besteht, von denen jede in einen Schieber (70) eingeschraubt ist, der auf einer an der Bodenplatte (64) befestigten Führungsvorrichtung (68) vertikal verstellbar und feststellbar ist.

3. Vorrichung nach Anspruch 2, dadurch gekennzeichnet, dass wenigstens einer der beiden Schieber (70) eine vertikal verlaufende Skala (78) mit Nullpunkt in der Höhe der Kondylarachse (22) zur Höheneinstellung des Tisches (92) aufweist.

4. Vorrichung nach einem der Ansprüche 1 bis 3, dadurch gekennzeichnet, dass die Bodenplatte (64) an beiden Längsseiten in sagittaler Richtung verlaufende Führungen (80) aufweist, von denen jede einen verstellbaren Schlitten (82) aufnimmt, der eine Vertikalverstelleinrichtung für den Tisch (92) trägt.

5. Vorrichtung nach Anspruch 4, dadurch gekennzeichnet, dass jede der beiden Vertikalverstelleinrichtungen aus einem Schieber (88) besteht, mit dem der Tisch (92) verbunden ist und der mittels einer Einstellspindel (90), die mit der gegenüberliegenden Einstellspindel (90) durch einen Synchrontrieb (98) verbunden ist, vertikal verstellbar und feststellbar ist.

6. Vorrichung nach Anspruch 4 oder 5, dadurch gekennzeichnet, dass an einer Längsseite der Führungen (80) eine Skala (102) mit Nullpunkt lotrecht unter der Kondylarachse (22) zur Einstellung des Tisches (92) in sagittaler Richtung vorgesehen ist.

7. Vorrichung nach Anspruch 6, dadurch gekennzeichnet, dass die Oberfläche des Tisches (92) eine bogenförmige Bezugslinie (94) für die Oberkieferschablone aufweist, deren vordere Bogenspitze (96) in Tischmitte (100) liegt.

## Claims

1. A device for plaster casting jaw models in the manufacture of dentures with an articulator (24) having a lower mould carrier (44) for a lower jaw model and an upper mould carrier (48) for an upper jaw model, the mould carrier being pivotable about a horizontal axis (22) – the condylar axis – relative to the lower mould carrier, characterised by a frame (42) with a bottom plate (64) on which to place the articulator (24) with a securing device (74) for fixing the condylar axis (22) relative to the bottom plate (64) and a table parallel to the bottom plate (64), the upper face of the table defining the bite plane (16) and being vertically and sagittally adjustable with respect to the condylar axis (22).

2. A device according to claim 1, characterised in that the adjusting device for fixing the condylar axis (22) consists of two coaxial adjusting screws (74) with opposing points (76), each screw being screwed into a slide (70), which is vertically movable and lockable on a guide device (68) mounted on the bottom plate (64).

3. A device according to claim 2, characterised in that at least one of the two slides (70) has a vertical scale (78) with nil at the level of the condylar axis (22) for adjusting the level of the table (92).

4. A device according to one of claims 1 to 3, characterised in that the bottom plate (64) has guides (80) extending in the sagittal direction on both longitudinal sides, each guide (80) receiving an adjustable side (82) which carries a vertical adjustment device for the table (92).

5. A device according to claim 4, characterised in that each of the vertical adjustment devices consists of a slide (88) to which the table (92) is connected and which is vertically adjustable and lockable by means of an adjustment spindle (90) connected to the opposing adjustments spindle (90) via a synchronising drive (98).

6. A device according to claim 4 or 5, characterised in that a scale (102) with nil perpendicularly below the condylar axis (22) is provided on a longitudinal side of the guides (80) for adjusting the table (92) in the sagittal direction.

7. A device according to claim 6, characterised in that the surface of the table (92) has an arc-shaped reference line (94) for the upper jaw mould, the front arc tip (96) of which lies in the table centre (100).

**Revendications**

1. Dispositif pour plâtrer des modèles de mâchoires lors de la fabrication de prothèses dentaires comportant un articulateur (24) qui présente un porte-modèle inférieur (44) pour le gabarit de la mâchoire inférieure et un porte-modèle supérieur (48) pour un gabarit de mâchoire supérieure, le porte-modèle supérieur étant pivotable relativement au porte-modèle inférieur autour d'un axe horizontal (22) – l'axe condylien –, caractérisé par un montage (42) comportant une plaque de base (64) pour la pose de l'articulateur (24), un dispositif de fixation (74) pour fixer l'axe condylien (22) par rapport à la plaque de base (64), ainsi qu'une table (92) parallèle à la plaque de base (64), table dont la surface détermine le plan de mastication (16) et qui est réglable dans le sens vertical et sagittal par rapport à l'axe condylien (22).

2. Dispositif selon la revendication 1, caractérisé par le fait que le dispositif de fixation destiné à fixer l'axe condylien (22) est constitué par deux vis de fixation (74) coaxiales opposées par leurs pointes (76), vis dont chacune est vissée dans un coulisseau (70) qui est mobile verticalement et peut être fixé sur un dispositif de guidage (68) fixé sur la plaque de base (64).

3. Dispositif selon la revendication 2, caractérisé par le fait qu'au moins l'un des deux coulisseaux (70) présente une échelle graduée (78) s'étendant verticalement dont le point zéro se trouve à la hauteur de l'axe condylien, pour le réglage en hauteur de la table (92).

4. Dispositif selon l'une des revendications 1 à 3, caractérisé par le fait que la plaque de base (64) présente sur les deux côtés longitudinaux des guides (80) s'étendant dans le sens sagittal, guides dont chacun reçoit un chariot mobile (82) qui supporte un dispositif de réglage vertical pour la table (92).

5. Dispositif selon la revendication 4, caractérisé par le fait que chacun des deux dispositifs de déplacement vertical est constitué d'un coulisseau (88) avec lequel est reliée la table (92) et qui est mobile verticalement et peut être fixé au moyen d'une broche de réglage (90) qui est reliée à la broche de réglage (90) lui faisant face par un entraînement synchrone (98).

6. Dispositif selon la revendication 4 ou 5, caractérisé par le fait que sur un côté longitudinal des guides (80) est prévue une échelle graduée (102) à point zéro, verticalement sous l'axe condylien (22) en vue de régler la table (92) dans le sens sagittal.

7. Dispositif selon la revendication 6, caractérisé par le fait que la surface de la table (92) présente une ligne de référence (94) de forme arquée pour le gabarit de la mâchoire supérieure, ligne de référence dont la pointe de l'arc avant (96) est située au centre de la table (100).

Fig. 1

Fig. 2

Fig. 3

Fig. 4

34

26

28

30

32

S(b)

34'

40    36

34    100  90  80  70  60  50  40  30  20  10

38

34"

V(a)

40

40    30

Fig. 5    28

34'    38

Fig. 6

Fig. 7

Fig. 8